**Europäisches Patentamt**

(19) **European Patent Office**

**Office européen des brevets**

(11) Numéro de publication: **0 232 646**
**B1**

(12) **FASCICULE DE BREVET EUROPEEN**

(45) Date de publication du fascicule du brevet:
**16.05.90**

(21) Numéro de dépôt: **86402807.1**

(22) Date de dépôt: **16.12.86**

(51) Int. Cl.⁵: **G01V 11/00**, G01V 1/16

(54) **Dispositif pour immobiliser un ensemble de détecteurs montés sur cardans.**

(30) Priorité: **17.12.85 FR 8518656**

(43) Date de publication de la demande:
**19.08.87 Bulletin 87/34**

(45) Mention de la délivrance du brevet:
**16.05.90 Bulletin 90/20**

(84) Etats contractants désignés:
**DE FR GB IT NL**

(56) Documents cités:
**US-A- 3 891 050**
**US-A- 4 021 774**

(73) Titulaire: **SOCIETE DE PROSPECTION ELECTRIQUE SCHLUMBERGER, 42, rue Saint-Dominique, F-75340 Paris Cédex 07(FR)**

(84) Etats contractants désignés: **FR IT**

(73) Titulaire: **SCHLUMBERGER LIMITED, 277 Park Avenue, New York, N.Y. 10172(US)**

(84) Etats contractants désignés: **DE GB NL**

(72) Inventeur: **Ohmer, Hervé, 23, rue Philippe de Champaigne, F-78180 Voisins le Bretonneux(FR)**
Inventeur: **Delpuech, Alain Georges Marie, 12, rue du Coteau, F-92130 Le Plessis Robinson(FR)**

(74) Mandataire: **Hagel, Francis, Etudes et Productions Schlumberger A L'ATTENTION DU SERVICE BREVETS 26, rue de la Cavée B.P. 202, F-92142 Clamart Cédex(FR)**

## Description

L'invention concerne un dispositif pour immobiliser un ensemble de détecteurs montés sur cardans, et plus particulièrement un tel dispositif pour un ensemble de trois détecteurs montés sur cardans dans une sonde de diagraphie adaptée à être descendue dans un forage.

L'invention s'applique notamment aux géophones destinés à détecter les ondes sismiques selon trois axes orthogonaux dont un vertical, et ce quelle que soit l'orientation de la sonde.

Il existe de nombreux types de dispositif d'acquisition de signaux sismiques, notamment la sonde décrite dans le brevet français N° 82.12253 publié sous le N° 2 530 345 . Lorsqu'on désire enregistrer dans un forage, à l'aide d'une telle sonde de diagraphie, les ondes sismiques engendrées par une source éloignée, il est préférable de les détecteur à l'aide d'un ensemble de trois géophones montés selon un arrangement triaxial, de manière à pouvoir évaluer leur angle d'incidence et leur amplitude, et ainsi, permettre une évaluation plus complète du profil sismique vertical.

La plupart des géophones existants sur le marché présentent des caractéristiques mécaniques de construction qui conduisent à les placer, pour obtenir la détection optimale, selon un certain angle d'inclinaison par rapport à la verticale, par exemple 0° (vertical) ou 90° (horizontal). Dans la présente demande, la verticale signifie la direction prise par un fil à plomb. Il s'avère cependant que de nombreux sondages sont déviés par rapport à la verticale, ce qui a pour conséquence directe que la détection effectuée par un ensemble de géophones fixes par rapport à la sonde, n'est pas optimale, voire est impossible dans certains cas.

Pour tenir compte de ces caractéristiques et ainsi opérer dans les meilleures conditions possibles, une solution consiste à détecter les signaux sismiques selon trois axes orthogonaux dont un vertical, et ce quelle que soit la déviation du sondage. Un tel arrangement nécessite donc un géophone à détection optimale selon la verticale et deux géophones à détection optimale selon l'horizontale.

Pour respecter l'arrangement décrit ci-dessus, l'on peut faire appel à un système de liaison par cardans entre le corps de la sonde et les trois géophones. Un système utilisant des liaisons par cardans pour un pendagemètre est décrit dans le brevet français 75 39466 publié sous le N° 2 296 858. En se référant à la figure 2 du brevet, la sonde contient un chassis libre en rotation par rapport à son axe longitudinal, le chassis étant équipé d'un balourd et d'un pendule. Le pendule est couplé à un potentiomètre qui mesure l'inclinaison de la sonde. Un tel système semble donc être adapté, du moins partiellement, à remplir la fonction cinématique recherchée. Cependant, appliqué à un ensemble de géophones, il n'est pas sans présenter d'inconvénients.

Il faut s'assurer que les cardans soient parfaitement bloqués avant d'entamer l'étape de détection des ondes sismiques, car tout mouvement d'un des géophones, aussi faible soit-il, dégrade la qualité des signaux sismiques enregistrés.

La dégradation du signal peut également résulter d'une excitation vibratoire causée par l'onde sismique incidente qui engendre des modes de résonance dans certaines parties du dispositif d'acquisition. Or, la qualité du couplage acoustique entre la formation et un géophone est notamment déterminée par la position relative du ou des pics de résonance par rapport au spectre sismique intéressant; il faut donc éviter, autant que possible, la présence de fréquences de résonance dans le spectre des ondes sismiques.

La présent invention a pour but d'éliminer les inconvénients évoqués ci-dessus.

Une sonde de diagraphie, selon l'invention, comprend
- un corps cylindrique solidaire de ladite sonde,
- un chassis logé dans ledit corps cylindrique et libre en rotation par rapport audit corps selon l'axe longitudinal dudit corps, et
- des moyens de détection supportés par ledit chassis et comprenant au moins un détecteur libre en rotation par rapport audit chassis. Le chassis comprend en outre
- des moyens de freinage qui, en position de repos, sont engagés de manière à immobiliser lesdits moyens de détection par rapport au corps cylindrique, et
- un solénoide qui, lorsqu'il est excité, désengage lesdits moyens de freinage.

Dans le cas particulier où la sonde est destinée à l'acquisition sismique, les moyens de détection comprennent trois géophones et le chassis est muni d'un balourd. Un premier géophone est monté solidaire dudit chassis avec son axe de détection perpendiculaire au plan formé par l'axe longitudinal dudit corps et le balourd, tandis que le second et le troisième géophones sont libres en rotation par rapport audit chassis selon un ou deux axes parallèles à l'axe de détection dudit premier géophone, et sont respectivement munis d'un deuxième et d'un troisième balourds qui permettent de maintenir l'axe de détection du second géophone dans un plan horizontal et l'axe de détection du troisième détecteur dans un plan vertical.

Le solénoide peut être excité, soit par un courant continu de manière à libérer simultanément en rotation ledit chassis et lesdits détecteurs, soit par un courant alternatif de manière à freiner progressivement le mouvement de rotation du chassis et des détecteurs.

Selon un mode particulier de réalisation, le dispositif de freinage comprend des moyens ressorts qui appliquent, par l'intermédiaire d'une tige commune, au moins trois patins respectivement sur une bande cylindrique solidaire dudit corps cylindrique et sur deux disques respectivement solidaires du deuxième et troisième géophones. Les moyens ressorts sont des ressorts diaphragmes solidaires du chassis; ils se composent de deux lames ressorts ajourées selon une forme en U.

L'immobilisation des moyens de détection, durant l'étape d'acquisition des signaux sismiques, permet avantageusement de rigidifier les liaisons souples qui existent entre les pièces mobiles et leur support, et, ainsi, déplacer les fréquences de résonance au-dessus su spectre intéressant.

Le fait que le frein soit toujours engagé en position de repos assure également une meilleure longévité à la partie mécanique du dispositif, grâce au mécanisme de blocage qui permet notamment d'éviter l'endommagement du sous-ensemble sous l'effet des chocs durant le transport de la sonde et durant son déplacement dans le forage.

La présente invention sera mieux comprise à l'aide de la description suivante qui fait référence aux dessins annexés dans lesquels:

- La figure 1 représente une installation pour la prospection sismique dans un forage;
- La figure 2 montre à plus grande échelle la sonde d'acquisition sismique représentée dans la figure 1;
- La figure 3 représente schématiquement la section de détection avec ses trois géophones montés sur cardans.
- La figure 4 est un schéma à plus grande échelle du dispositif d'immobilisation représenté partiellement dans le figure 3.

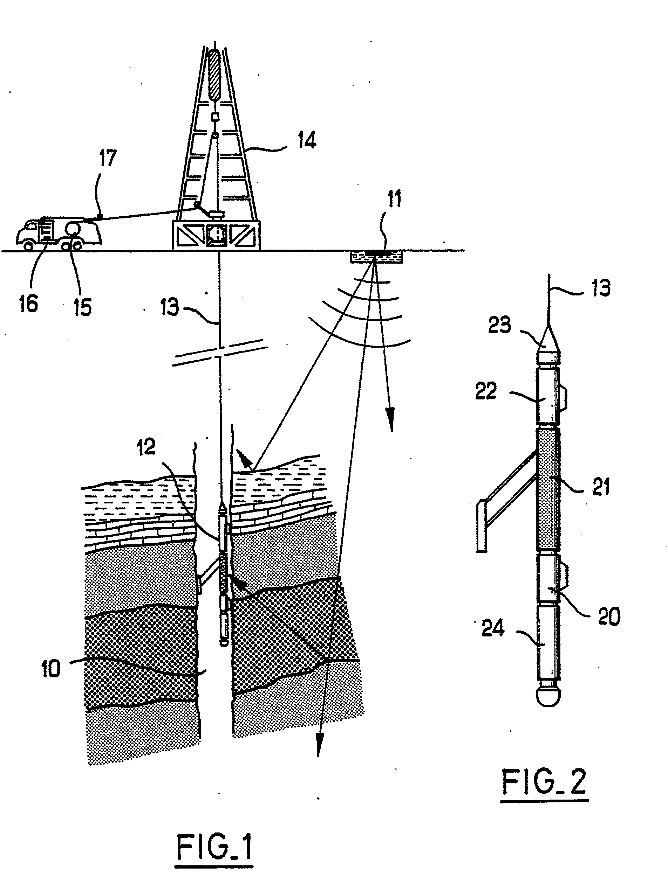

La figure 1 représente une installation pour la prospection sismique dans un forage 10. Une source sismique 11 émet des ondes sismiques qui, après avoir parcouru les formations souterraines selon diverses trajectoires, sont recueillies à l'aide d'une sonde d'acquisition sismique 12. Cette dernière est suspendue dans le sondage 10 au bout d'un câble électrique 13 qui chemine autour d'un jeu de poulies attachées à la tour de forage 14, puis à travers un dispositif 17 destiné à mesurer la profondeur à laquelle se trouve la sonde, pour enfin venir s'enrouler sur un treuil 15. Le cable électrique 13 permet également l'alimentation électrique de la sonde, ainsi que la transmission duplexe entre la sonde 12 et l'instrumentation de surface 16.

Comme le montre la figure 2, la sonde 12 comprend essentiellement quatre sections: une section de détection 20 déstinée à recueillir les signaux sismiques, une section d'ancrage 21, une cartouche électronique 22 reliée au câble 13 par l'intermédiaire d'une tête 23 et une cartouche électronique 24 placée à l'extrémité inférieure de la sonde 12.

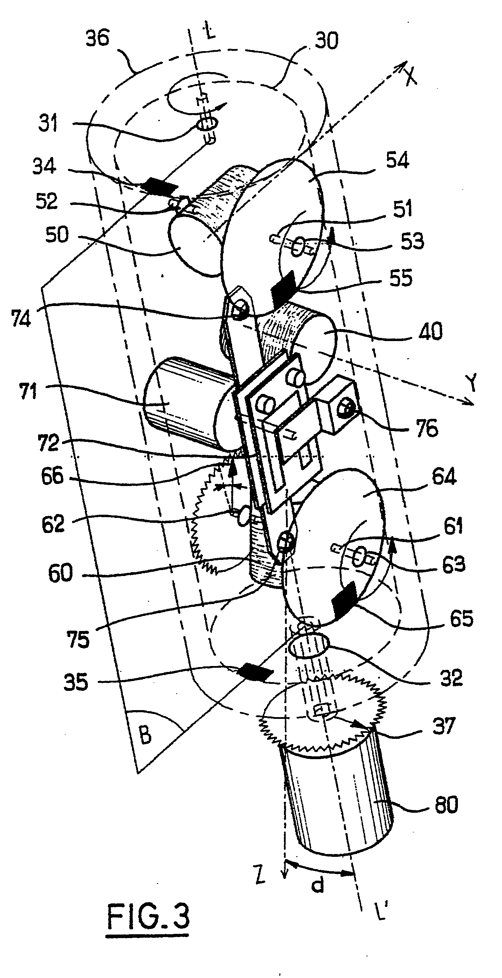

Référence est maintenant faite à la figure 3 dans laquelle la section de détection 20 est agrandie. Cette dernière comprend notamment un chassis 30 qui est logé dans un corps cylindrique 36 solidaire de la section 20, et qui est monté tournant sur deux paliers 31 et 32, lui permettant ainsi de tourner librement par rapport au corps 36 autour de l'axe longitudinal LL' de la sonde 12. Le chassis 30 est en outre doté d'un balourd schématisé par deux masses 34 et 35 qui, avec l'axe LL', forment un plan B. Par conséquent, quelle que soit l'orientation de la sonde 12, l'effet de la pesanteur aura naturellement tendance à ramener le plan B dans un plan vertical.

Un premier géophone 40 solidaire du chassis 30 est orienté selon un axe Y perpendiculaire à l'axe longitudinal LL' de la sonde et au plan B défini ci-dessus. Par conséquent, quelle que soit l'orientation de la sonde 12, l'axe Y du géophone 40 sera horizontal sous l'effet de la pesanteur. L'on utilisera donc pour le géophone 40 un géophone à détection optimale selon l'horizontale.

Un second et un troisième géophones, 50 et 60, dont les axes respectifs de détection X et Z sont parallèles au plan B ou contenus dans ce plan, sont chacun montés sur une liaison à un degré de liberté de manière à pouvoir pivoter autour de deux axes parallèles à l'axe Y.

Le second géophone 50, solidaire de l'axe 51, est monté tournant par rapport au chassis 30 par l'intermédiaire des paliers 52 et 53. Un disque 54 perpendiculaire à l'axe 51 et solidaire de ce dernier, est pourvu d'un balourd schématisé par la masse 55 qui est placée de telle manière à ce que, sous l'effet de la pesanteur, l'axe X soit toujours horizontal.

De même, le troisième géophone 60, solidaire de l'axe 61, est monté tournant par rapport au chassis 30 par l'intermédiaire des paliers 62 et 63. Une disque 64 perpendiculaire à l'axe 61 et solidaire de ce dernier, est muni d'un balourd schématisé par la masse 65 qui est placée de telle manière à ce que, sous l'effet de la pesanteur, l'axe Z soit toujours vertical. L'angle d'inclinaison de la sonde et par conséquent la déviation du sondage, c'est à dire l'angle d formé par l'axe LL' et la verticale, est mesuré à l'aide d'un potentiomètre 66 dont le curseur est entrainé par l'axe tournant 61.

L'orientation relative du chassis 30 par rapport au corps de sonde 12 est mesurée à l'aide d'un potentiomètre 37 dont le curseur est entrainé par la rotation du chassis 30.

Le chassis 30 supporte en outre un dispositif d'immobilisation qui, de façon préférentielle, comprend un solénoide 71, un ensemble de ressorts diaphragmes 72, un ensemble de transmission 77 et 78, ainsi que des patins de freinage 74, 75 et 76. Les diférents éléments de ce dispositif d'immobilisation vont être décrits ci-après.

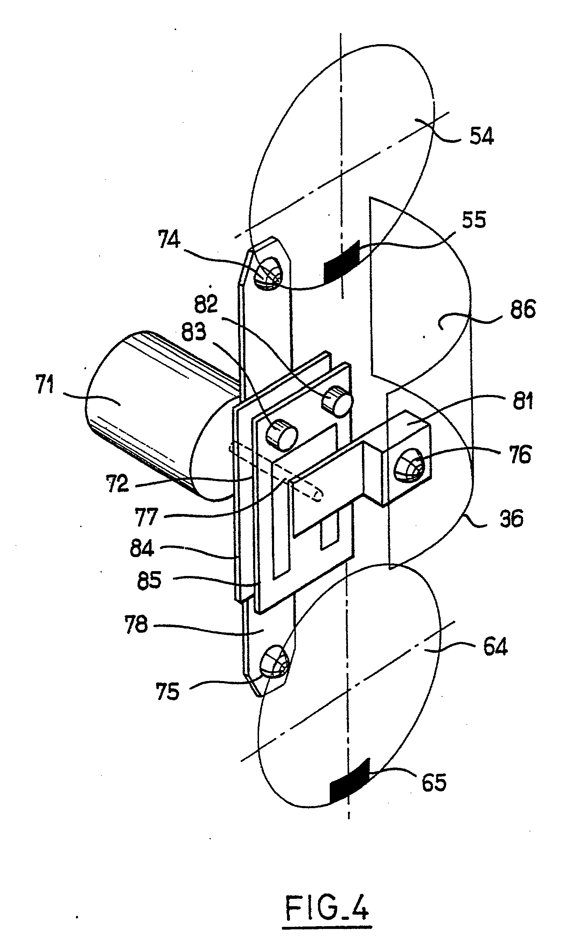

En se rapportant à la figure 4, le système de transmission comprend notamment une tige 77 adaptée à recevoir une barre transversale 78 équipée respectivement à chacune de ses extrémités d'un patin de freinage 74 et 75. Le bout de la tige 77 supporte en outre un sabot 81 muni d'un patin 76. La position de chacun des trois patins de freinage 74, 75 et 76 est ajustable à l'aide d'un système classique de réglage à la portée de l'homme de l'art.

Un ensemble 72 de ressorts diaphragmes, solidaires du chassis 21 par l'intermédiaire des vis 82 et 83, poussent en permanence la tige 77 en vue d'appliquer les patins 74, 75 et 76 respectivement sur la face interne 86 du corps cylindrique 36, et sur les faces des disques 54 et 64. Les ressorts diaphragmes sont formés, de manière préférentielle, de deux lames ressorts 84 et 85 espacées par une cale (non représentée) et ajourées en forme de U. L'ensemble de ressorts diaphragmes décrit a également pour fonction d'assurer un bon guidage en translation de la tige 77.

La tige 77 traverse le noyau d'un solemoide 71 qui, lorsqu'il n'est pas excité, n'agit en aucune manière sur la tige 77; cette dernière transmet alors intégralement la force d'application, par l'intermédiaire des patins 74, 75 et 76 respectivement à la face interne 86 du corps cylindrique 36 et aux faces des disques 54 et 64. Par conséquent, le chassis 30 et les géophones 40, 50 et 60 sont complètement immobilisés par rapport au corps de sonde 12.

Lorsque le solénoide est sollicité par un courant électrique continu, il transmet à la tige 77 un mouvement qui s'oppose à la direction de la force d'application, de manière à écarter les patins 74, 75 et 76 de leur surface de freinage respective. Si le même solénoide est soumis à un courant alternatif, il transmettra à la tige 77 un mouvement alternatif qui, au lieu d'immobiliser le chassis 30 et les géophones 50 et 60, freinera le mouvement de ces derniers jusqu'à ce qu'ils prennent leur position d'équilibre sous l'effet de la pesanteur.

En résumé, le dispositif d'immobilisation est en action par l'intermédiaire d'une tige qui, soumise à des moyens ressorts communs, applique les trois patins sur leur surface de freinage respective lorsque le solénoide n'est pas sollicité; si ce dernier est excité par un courant électrique, la tige recule en s'opposant aux moyens ressorts, et écarte simultanément les trois patins de leur surface de freinage respective.

Les fils électriques (non représentés), notamment ceux qui alimentent le solénoide 86, ceux qui acheminent les signaux détectés par les géophones 74, 75 et 76 et ceux des potentiomètres 37 et 66, sont reliés à la partie fixe de la sonde 12 par l'intermédiaire d'un collecteur 80. Ce dernier est lui-même relié à l'une et/ou à l'autre des cartouches électroniques 22 et 24. Ainsi le solénoide 71 peut être piloté par l'instrumentation de surface 16 et les signaux sismiques détectés par les géophones peuvent être transmis, sous forme analogique ou sous forme numérique, à l'instrumentation de surface.

L'on décrira maintenant les différentes séquences du mode opératoire de la sonde d'acquisition sismique dotée d'un tel dispositif d'immobilisation des géophones. La sonde d'acquisition 12 est tout d'abord déplacée dans le forage jusqu'au niveau voulu, les trois géophones étant bloqués par le dispositif d'immobilisation. Puis, la section d'ancrage est activée de façon à ancrer la section de détection selon la technique décrite dans le brevet français N° 82.12253. Une fois la sonde ancrée, l'on envoie un signal de commande à partir de l'instrumentation de surface 16, qui pilote la connection du solénoide à une source de courant pendant un laps de temps suffisant, typiquement 10 à 15 secondes, pour écarter les patins de freinage et ainsi permettre aux géophones de venir se placer, sous l'effet de la pesanteur, dans la configuration orthogonale désirée, à savoir un axe Z vertical et deux axes X et Y horizontaux. Une fois le courant interrompu dans le solénoide, les patins sont automatiquement appliqués à nouveau sur leur piste de freinage respective, de manière à immobiliser les géophones durant l'acquisition des signaux sismiques. Cette dernière étant réalisée, l'on relache l'ancrage et l'on déplace la sonde jusqu'au niveau suivant.

Il faut cependant souligner que le dispositif d'immobilisation décrit ci-dessus peut faire l'objet de variantes à la portée de l'homme de l'art, sans pour autant sortir du cadre de la présente invention. Ces variantes peuvent notamment consister à modifier le mécanisme de transmission, à augmenter le nombre de patins, à utiliser des moyens ressorts différents.

D'autre part, il va sans dire que l'invention décrite ne s'applique pas seulement à un ensemble géophones, mais à n'importe quel ensemble de détecteurs comprenant au moins un détecteur monté tournant à l'intérieur d'un chassis tournant.

Dans le cas où les détecteurs sont de faibles dimensions, il serait notamment possible de monter deux ou plusieurs détecteurs sur le même axe de rotation.

**Revendications**

1. Une sonde (12) de diagraphie comprenant:
- un corps (36) cylindrique solidaire de ladite sonde (12);
- un chassis (30) logé dans ledit corps cylindrique (36) et libre en rotation par rapport audit corps (36) selon l'axe longitudial (LL') dudit corps; et
- des moyens de détection supportés par ledit chassis et comprenant au moins un détecteur (54) libre en rotation par rapport audit chassis (30),
caractérisé en ce que le chassis (30) comprend en outre
- des moyens de freinage qui, en position de repos, sont engagés de manière à immobiliser desdits moyens de détection (54) par rapport au corps cylindrique (36), et
- un solénoide (71) qui, lorsqu'il est excité, désengage lesdits moyens de freinage.

2. Une sonde de diagraphie selon la revendication 1, caractérisé en ce que le chassis (30) est muni d'un balourd (34, 35) et en ce que les moyens de détection comprennent trois géophones.

3. Une sonde de diagraphie selon la revendication 2, caractérisé en ce qu'un premier géophone (40) est monté solidaire dudit chassis (30) avec son axe de détection (X) perpendiculaire au plan (B) formé par l'axe longitudinal dudit corps et le balourd, et en ce que le second (50) et le troisième (60) géophones sont libres en rotation par rapport audit chassis selon un ou deux axes (51, 61) parallèles à l'axe de détection (X) dudit premier géophone (40), et sont respectivement munis d'un deuxième (55) et d'un troisième (65) balourds qui permennt de maintenir l'axe de détection (Y) du second géophone (50) dans un plan horizontal et l'axe de détection (Z) du troisième détecteur dans un plan vertical.

4. Un dispositif selon la revendication 3, caractérisé en ce que l'excitation du solénoide se fait par un courant continu de façon à libérer simultanément en rotation ledit chassis (30) et lesdits détecteurs (50, 60).

5. Un dispositif selon la revendication 3, caractérisé en ce que l'excitation du solénoide se fait par un courant alternatif de façon de freiner progressivement le mouvement de rotation du chassis (30) et des détecteurs (50, 60).

6. Un dispositif selon l'une des revendications 4 ou 5, caractérisé en ce que le dispositif de freinage comprend des moyens ressorts patins (74, 75, 76) respectivement sur une bande cylindrique (86) solidaire dudit corps cylindrique (36) et sur deux disques (54, 64) respectivement solidaires du deuxième et troisième géophones (50, 60).

7. Un dispositif selon la revendication 6, caractérisé en ce que les moyens ressorts (72) sont des ressorts diaphragmes solidaires du chassis (30).

8. Un dispositif selon la revendication 7, caractérisé en ce que les ressorts diaphragmes sont formés de deux lames ressorts ajourées selon une forme en U.

## Claims

1. A logging sonde (12) comprising:
- a cylindrical body (36) fixed to said sonde (12);
- a frame (30) lodged inside said cylindrical body (36) and free to rotate relative to said body (36) about the longitudinal axis (LL'y) of said body; and
- detector means supported by said frame and including at least one detector (54) free to rotate relative to said frame (30), characterized in that the frame (30) further includes:
- braking means which, in a rest position, are engaged in such a manner as to lock said detector means (54) relative to the cylindrical body (36); and
- a solenoid (71) which, when excited, disengages said braking means.

2. A logging sonde according to claim 1, characterized in that the frame (30) is provided with an unbalanced mass (34, 35) and in that the detector means comprises three geophones.

3. A logging sonde according to claim 2, characterized in that a first geophone (40) is fixed to said frame (30) having its detection axis (X) perpendicular to the plane (B) defined by the longitudinal axis of said body and the unbalanced mass, and in that the second (50) and third (60) geophones are free to rotate relative to said frame about one or two axes (51, 61) parallel to the detection axis (X) of said first geophone (40), and are respectively provided with a second unbalanced mass (55) and a third unbalanced mass (65) enabling the detection axis (Y) of the second geophone (50) to be maintained in a horizontal plane and the detection axis (Z) of the third detector to be maintained in a vertical plane.

4. An apparatus according to claim 3, characterized in that the solenoid is excited by DC so as to simultaneously free said frame (30) and said detectors (50, 60) in rotation.

5. An apparatus according to claim 3, characterized in that the solenoid is excited by AC so as to progressively brake rotation of the frame (30) and of the detectors (50, 60).

6. An apparatus according to claim 4 or 5, characterized in that the braking means comprises spring means which, through a common rod (77), apply three shoes (74, 75, 76) respectively against a cylindrical strip (86) fixed to said cylindrical body (36) and against two disks (54, 64) respectively fixed to the second and third geophones (50, 60).

7. An apparatus according to claim 6, characterized in that the spring means (72) are diaphragm springs fixed to the frame (30).

8. An apparatus according to claim 7, characterized in that the diaphragm springs are constituted by two spring blades having respective U-shaped openings.

## Patentansprüche

1. Diagraphie-Sonde (12), umfassend:
- einen zylindrischen, mit der Sonde (12) verbundenen Korpus (36),
- ein in dem zylindrischen Korpus (36) untergebrachtes Chassis (30), das relativ zu dem Korpus frei drehbeweglich um die Längsachse (LL') des Korpus', ist, und
- Detektionsmittel, abgestützt von dem Chassis und mindestens einen relativ zu dem Chassis (30) frei drehbeweglichen Detektor (54) umfassend, dadurch gekennzeichnet, daß das Chassis ferner umfaßt
- Bremsmittel, die in Ruheposition derart im Eingriff sind, daß sie die Detektionsmittel (54) relativ zu dem zylindrischen Korpus (36) immobilisieren, und
- ein Solenoid (71), das bei Erregung die Bremsmittel außer Eingriff bringt.

2. Diagraphie-Sonde nach Anspruch 1, dadurch gekennzeichnet, daß das Chassis (30) mit einer Unwucht (34, 35) versehen ist und daß die Detektionsmittel drei Geophone umfassen.

3. Diagraphie-Sonde nach Anspruch 2, dadurch gekennzeichnet, daß ein erstes Geophon (40) mit dem Chassis (30) verbunden montiert ist mit seiner Detektionsachse (X) senkrecht zu der Ebene (B), gebildet von der Längsachse des Korpus und der Unwucht, und daß das zweite (50) und dritte (60) Geophon frei drehbeweglich relativ zu dem Chassis um eine oder zwei Achsen (51, 61) parallel zur Detektionsachse (X) des ersten Geophons (40) sind sowie jeweils mit einer zweiten (55) und einer dritten (65) Unwucht versehen sind, die es ermöglichen, die Detektionsachse (Y) des zweiten Geophons (50) in einer Horizontalebene und die Detektionsachse (Z) des dritten Detektors in einer Vertikalebene zu halten.

4. Anordnung nach Anspruch 3, dadurch gekennzeichnet, daß die Erregung des Solenoids durch einen Gleichstrom derart erfolgt, daß das Chassis (30) und die Detektoren (50, 60) gleichzeitig zur Drehung freigegeben werden.

5. Anordnung nach Anspruch 3, dadurch gekennzeichnet, daß die Erregung des Solenoids durch einen Wechselstrom derart erfolgt, daß die Drehbewegung des Chassis (30) und der Detektoren (50, 60) progressiv gebremst wird.

6. Anordnung nach Anspruch 4 oder 5, dadurch gekennzeichnet, daß die Bremseinrichtung Federmittel umfaßt, die über eine gemeinsame Stange (77) drei Schuhe (74, 75, 76) jeweils an ein zylindrisches Band (86), verbunden mit dem zylindrischen Korpus (36), und an zwei Scheiben (54, 64) anlegt, jeweils verbunden mit dem zweiten bzw. dritten Geophon (50, 60).

7. Anordnung nach Anspruch 6, dadurch gekennzeichnet, daß die Federmittel (72) mit dem Chassis (30) verbundene Membranfedern sind.

8. Anordnung nach Anspruch 7, dadurch gekennzeichnet, daß die Membranfedern als zwei durchbrochene in U-Form angeordnete Lamellenfedern ausgebildet sind.

FIG.1

FIG.2

FIG.3

FIG_4